Europäisches Patentamt

European Patent Office

Office européen des brevets

(11) Veröffentlichungsnummer: **0 319 848 B1**

(12) **EUROPÄISCHE PATENTSCHRIFT**

(45) Veröffentlichungstag der Patentschrift: **01.06.94**

(21) Anmeldenummer: **88120062.0**

(22) Anmeldetag: **01.12.88**

(51) Int. Cl.5: **C08L 51/04**, C08L 55/02,
C08L 33/08, C08L 9/00,
C08L 27/06

(54) **Polymerenmischung und ihre Verwendung als Polyvinyl-chloridmodifikator.**

(30) Priorität: **11.12.87 DE 3742103**

(43) Veröffentlichungstag der Anmeldung:
**14.06.89 Patentblatt 89/24**

(45) Bekanntmachung des Hinweises auf die
Patenterteilung:
**01.06.94 Patentblatt 94/22**

(84) Benannte Vertragsstaaten:
**DE FR GB IT NL SE**

(56) Entgegenhaltungen:
**EP-A- 0 101 904**
**EP-A- 0 122 516**

(73) Patentinhaber: **BAYER AG**

**D-51368 Leverkusen(DE)**

(72) Erfinder: **Lindner, Christian, Dr.**
**Riehlinstrasse 200**
**D-5000 Köln 60(DE)**
Erfinder: **Braese, Hans-Eberhard, Dipl.-Ing.**
**Käthe-Kollwitz-Strasse 3**
**D-5000 Köln 71(DE)**
Erfinder: **Piejko, Karl-Erwin, Dr.**
**Unterscheider Weg 7a**
**D-5060 Bergisch Gladbach 2(DE)**

## Beschreibung

Die Erfindung betrifft eine Mischung aus zwei ausgewählten Pfropfmischpolymerisaten auf Kautschukbasis, einem Nitrilgruppen enthaltenden Kautschuk und gegebenenfalls einem hochmolekularen thermoplastischen Harz sowie die Verwendung dieser Mischung als Zusatz zu Formmassen auf Polyvinylchloridbasis, insbesondere zur Herstellung von prägungsfähigen Folien.

Polyvinylchlorid ist ein bekannter Chemiewerkstoff für die Herstellung von Folien. Zum Laminieren und Kaschieren verwendet man Polyvinylchloridformmassen, die neben Polyvinylchlorid noch Nitrilkautschuke, weichmachende Komponenten und gegebenenfalls speziellere Additive enthalten (vgl. Deutsche Offenlegungsschrift 3 204 144, Europäische Patentanmeldung 101 904). Es ist erwünscht, daß die Bestandteile dieser Formmassen als Pulver vorliegen, damit das homogene Vermischen mit dem ebenfalls pulverförmig vorliegenden Polyvinylchlorid einfach ist.

An die Eigenschaften solcher Formmassen werden besondere Anforderungen gestellt. So muß ein solches Material nicht nur gute Zähigkeit, Bruchfestigkeit, Flexibilität, Elastizität, Dehnung, Kältebruchfestigkeit, Wärmestandfestigkeit, Haft- und Abriebfestigkeit besitzen sondern es muß auch zu Flächengebilden verarbeitet werden können, z.B. durch Kalandrieren und Tiefziehen, ausgewogene Schrumpf- und Dimensionsstabilitätseigenschaften besitzen, und Oberflächen bilden, die zur dekorativen Gestaltung nachbearbeitet werden können (z.B. durch Prägen).

Erfindungsgemäß wurde gefunden, daß die einen Gegenstand der Erfindung bildenden Polymerisatmischungen Polyvinylchlorid zugesetzt werden können und dann Formmassen ergeben, die besonders kältefeste Folien ergeben, wobei natürlich das oben beschriebene komplexe Eigenschaftsprofil erhalten bleibt.

Ein Gegenstand der Erfindung sind somit Polymerisatmischungen, insbesondere in Form von Pulvern, aus

a) 50 - 25 Gew.-Teilen eines Pfropfprodukts eines Gemisches aus 25 - 40 Gew.-Teilen Acrylnitril und 75 - 60 Gew.-Teilen Styrol, $\alpha$-Methylstyrol, Alkylmethacrylat oder Mischungen daraus auf einen teilchenförmigen hochvernetzten Dienkautschuk mit einem Kautschukgehalt von 20 - 40 Gew.-%,

b) 45 - 10 Gew.-Teilen eines Pfropfprodukts eines Gemisches aus 20 - 35 Gew.-Teilen Acrylnitril und 80 - 65 Gew.-Teilen Styrol oder $\alpha$-Methylstyrol auf einen teilchenförmigen, hochvernetzten Dienkautschuk mit einem Kautschukgehalt von 50 - 75 Gew.-%, wobei die Pfropfausbeute $\geq$60 Gew.-%, besonders bevorzugt $\geq$80 Gew.-% ist,

c) 10 - 50 Gew.-Teilen eines teilchenförmigen, teilvernetzten kautschukartigen Copolymerisates eines $C_2$-$C_8$-Alkylacrylates und/oder Butadien mit (bezogen auf Copolymerisat) bis zu 40 Gew.-% Acrylnitril, welches einen mittleren Teilchendurchmesser ($d_{50}$) von 0,1 - 0,3 $\mu$m und einen Gelgehalt von 40 - 99 Gew.-% aufweist und

d) gegebenenfalls bis zu 5 Gew.-Teilen eines hochmolekularen, unvernetzten Copolymerisates aus Styrol oder Methylmethacrylat und bis zu 40 Gew.-% Acrylnitril mit Staudinger-Zahlen [$\eta$] (in Dimethylformamid, bei 20° C) von >4 dl/g.

Pfropfprodukt im Sinne der Erfindung ist das Reaktionsprodukt der Pfropfpolymerisation. Da die Pfropfung nie vollständig verläuft, handelt es sich um ein Gemisch des eigentlichen Pfropfpolymerisats mit freiem Copolymerisat der Pfropfmonomeren. Pfropfausbeute ist der Prozentsatz der tatsächlich pfropfpolymerisierten Monomeren von den insgesamt vorhandenen Pfropfmonomeren.

Pfropfprodukte a) im Sinne der Erfindung können beispielsweise hergestellt werden durch Pfropfpolymerisation von 80 - 60, insbesondere 75 - 65 Gew.-% eines Monomerengemisches aus 25 - 40 Gew.-Teilen Acrylnitril und 75 - 60 Gew.-Teilen Styrol, $\alpha$-Methylstyrol, Alkylmethacrylat, insbesondere Styrol, auf 20 - 40 Gew.-%, insbesondere 25 - 35 Gew.-% eines teilchenförmigen hochvernetzten Dienkautschuks, z.B. eines Polymerisats aus 100 - 70 Gew.-% Butadien und 0 - 30 Gew.-% Styrol, Acrylnitril und/oder Alkyl(meth)acrylat, mit mittleren Teilchendurchmessern ($d_{50}$) von 0,1 - 0,5 $\mu$m und Gelgehalten von >70 Gew.-%; die Herstellung solcher Pfropfpolymerisate ist bekannt, z.B. durch Emulsionspolymerisation der Monomerengemische in Gegenwart von Kautschuk-Latices bei Temperaturen von größer als 50°C, initiiert durch radikalische Initiatoren wie wasserlösliche anorganische Peroxide.

Pfropfprodukte b) im Sinne der Erfindung können hergestellt werden durch Pfropfpolymerisation von 50 - 25 Gew.-% eines Monomerengemisches aus 20 - 35 Gew.-Teilen Acrylnitril und 80 - 65 Gew.-Teilen Styrol oder $\alpha$-Methylstyrol auf 50 - 75 Gew.-% eines teilchenförmigen, hochvernetzten Dienkautschuks, insbesondere Polybutadien mit mittleren Teilchendurchmessern ($d_{50}$) von 0,2 - 0,6 $\mu$m und Gelgehalten von >70 Gew.-%, wobei die Pfropfausbeute >60 Gew.-% beträgt, d.h. daß die Hauptmenge des polymerisierten Monomerengemisches über kovalente Bindungen chemisch an den Kautschuk gebunden ist. Solche Pfropfpolymerisate sind bekannt. Sie können z.B. durch Emulsionspfropfpolymerisation von Vinylmonome-

2

rengemischen in Gegenwart eines Kautschuklatex mit einem Redoxinitiatorsystem aus organischem Hydroperoxid und Ascorbinsäure hergestellt werden.

Die kautschukartigen Copolymerisate c) der Erfindung sind teilchenförmige, teilvernetzte Copolymerisate eines $C_2$- bis $C_8$-Alkylacrylates (insbesondere Butylacrylat, Pentyl-, Hexylacrylat) und/oder Butadien mit bis zu 40 Gew.-% eingebautem Acrylnitril, vorzugsweise mit 20 - 35 Gew.-% Acrylnitril; bevorzugt sind Copolymerisate eines $C_2$-$C_8$-Alkylacrylats mit Acrylnitril. Diese Kautschuke besitzen mittlere Teilchendurchmesser ($d_{50}$) von 0,1 - 0,3 $\mu$m und Gelgehalte von 40 - 99 Gew.-%, insbesondere von 75 - 99 Gew.-%. Sie sind bekannt und können durch radikalische Emulsionspolymerisation bei Temperaturen >30° C von Monomermischungen aus bis zu 40 Gew.-% Acrylnitril und 80 - 60 Gew.-% Alkylacrylat und/oder Butadien hergestellt werden. Zur Einstellung der Teilvernetzung müssen besondere Bedingungen eingehalten werden. Verlangt ist eine Vernetzung (ausgedrückt durch den Gelgehalt) mit relativ geringer Vernetzungsdichte (ausgedrückt durch den Quellungsindex). Diese Eigenschaftskombination erhält man z.B., wenn man bei der Emulsionspolymerisation von Acrylatmonomeren bis zu 1 Gew.-% polyfunktionelle copolymerisierbare Allylverbindungen mitverwendet, insbesondere Triallylverbindungen wie z.B. Triallylcyanurate und -isocyanurate.

Verwendet man Butadien also Monomer, dann kann auf polyfunktionelle Vinyl- oder Allylmonomeren verzichtet werden, wenn man die Emulsionspolymerisation so führt, daß Butadien selbst als Vernetzer wirkt (z.B. durch Copolymerisation bei sehr hohen Temperaturen - über 40° C, oder sogar über 60° C oder durch Polymerisation bis zu sehr hohen Umsätzen).

Komponenten d) im Sinne der Erfindung sind extrem hochmolekulare, aber in organischen Lösungsmitteln noch lösliche Homopolymere von Methylmethacrylat, sowie Copolymerisate von Styrol oder Methylmethacrylat mit bis zu 40 Gew.-% Acrylnitril. Bevorzugt sind Methylmethacrylat-Acrylnitril-Copolymerisate mit Acrylnitrilgehalten von 20 bis 35 Gew.-%. Die Polymerisate d) lassen sich durch Emulsions- oder Suspensionspolymerisation herstellen und besitzen hohe mittlere Molekulargewichte, ausgedrückt durch den Staudinger-Index [$\eta$] gemessen in DMF bei Raumtemperatur von >4 dl/g, insbesondere von 5 - 15 dl/g.

Die Komponenten a) bis d) fallen bei ihrer Herstellung als wäßrige Emulsionen (Latices) an mit Feststoffgehalten von 20 - 50 Gew.-%.

Es ist wichtig, daß die für die Polyvinylchlorid-Ausrüstung bestimmten Polymerisatmischungen in Pulverform mit Polyvinylchlorid vorgemischt werden, bevor schmelzcompoundiert wird. Da aber ein Teil der Komponenten der Polymerisatmischung, z.B. b) und c), zum Zusammenkleben neigen, ist es nicht ohne weiteres möglich, die Komponenten a) bis d) miteinander zu mischen.

Man kann die erfindungsgemäßen Polymerisatmischungen wie folgt erhalten: Die Emulsionen (Latices) der Komponenten a) bis d) werden in Mengen entsprechend der gewünschten Polymerzusammensetzung miteinander vermischt; dabei muß man Agglomerat-Bildungen vermeiden, d.h., schon bei der Erzeugung der Komponenten-Latices muß auf ihre Mischbarkeit geachtet werden, z.B. bei der Wahl der Emulgatoren und dem Einstellen des pH-Wertes, um eine spätere gegenseitige Ausfällung der Emulsionen zu vermeiden. Nach oder bei dem Mischen der Komponenten-Latices bei etwa 20 - 70° C (mit konventionellen Mischern), können phenolische Antioxidantien zugesetzt werden.

Die Emulsionsmischung kann mittels herkömmlicher Verfahren koaguliert (z.B. durch Elektrolyteinsatz oder Direkttrocknung), gewaschen und zu einem Pulver getrocknet werden. Bei der weiteren Verarbeitung kann dieses Pulver mit pulverförmigem Polyvinylchlorid gemischt werden, und gegebenenfalls weitere Additive wie bekannte weichmachende, niedermolekulare Verbindungen oder Polymere zugefügt werden. Die noch pulverförmige Mischung kann dann durch Schmelzcompoundieren homogenisiert werden. Die Polyvinylchlorid enthaltenden Formmassen zeichnen sich durch eine besonders vorteilhafte Eigenschaftskombination insbesondere bei tieferen Temperaturen aus.

Die Staudinger-Indices wurden in Dimethylformamid ermittelt (vgl. dazu M. Hoffmann et al., "Polymeranalytik I und II", Georg Thieme Verlag, Stuttgart, 1977). Die Pfropfausbeute (vgl. ebenfalls Hoffmann et al., Polymeranalytik I und II) wurde durch Fraktionierung mit entmischenden Flüssigkeiten bestimmt. Die Teilchendurchmesser sind $d_{50}$-Werte und durch Ultrazentrifugenmessung ermittelt (vgl. dazu W. Scholtan et al., Kolloidz. und Z. Polymere 250 (1972)).

Beispiele:

Eingesetzte Polymerisate

Komponente a):

Emulsionspfropfpolymerisat aus 15 Gew.-% feinteiligem Polybutadien eines mittleren Teilchendurchmessers ($d_{50}$) von 0,1 $\mu$m, 15 Gew.-% grobteiligem Polybutadien eines mittleren Teilchendurchmessers ($d_{50}$) von 0,4 $\mu$m und 70 Gew.-% Styrol/Acrylnitril ("SAN")-Copolymerisat, enthaltend 33 Gew.-% Acrylnitril einpolymerisiert. Die Polybutadiene besitzen Gelgehalte von 80 - 95 Gew.-%. Das Pfropfpolymerisat wurde durch wäßrige Emulsionspfropfpolymerisation unter Initiierung mit Kaliumperoxidisulfat erzeugt.

Komponente b):

Emulsionspfropfpolymerisat aus 50 Gew.-% grobteiligem Polybutadien eines mittleren Teilchendurchmessers ($d_{50}$) von 0,4 $\mu$m und 50 Gew.-% Styrol/Acrylnitril-Copolymerisat, enthaltend 28 Gew.-% Acrylnitril einpolymerisiert. Das Polybutadien besitzt einen Gelgehalt von 89 Gew.-%. Das Pfropfpolymerisat wurde durch wäßrige Emulsionspfropfpolymerisation unter Initiierung mit Cumolhydroperoxid/Ascorbinsäure erzeugt, wobei die Pfropfmonomeren mit einer Pfropfausbeute von 80 Gew.-% aufgepfropft werden.

Komponente c):

Emulsionscopolymerisat aus 30 Gew.-% Acrylnitril und 70 Gew.-% n-Butylacrylat mit einem mittleren Teilchendurchmesser ($d_{50}$) von 0,2 $\mu$m, einem Gelgehalt von 93 Gew.-% und einem Quellungsindex von 14; das Copolymer wurde durch vernetzende Terpolymerisation mit Triallylcyanurat erhalten.

Komponente d):

Emulsionspolymerisat aus 66 Gew.-% Methylmethacrylat und 34 Gew.-% Acrylnitril mit einem Staudinger-Index von 5,4 dl/g (in Dimethylformamid).

Vergleichspolymerisat B zu Komponente b)

B 1) Emulsionspfropfpolymerisat der Bruttozusammensetzung gemäß Komponente b), hergestellt mit einer Pfropfausbeute von 52 Gew.-%.
B 2) Emulsionspfropfpolymerisat aus 75 Gew.-% grobteiligem Polybutadien gemäß Komponente B 1 oder b) und 25 Gew.-% Styrol/Acrylnitril-Harz einer Zusammensetzung gemäß Komponente B 1 oder b); das Produkt wurde erhalten unter einer Pfropfausbeute von 49 Gew.-%.

PVC:

Polyvinylchlorid mit einem K-Wert von 70.

Weichmacher:

W 1:     Di-isodecylphthalat
W 2:     Ethylen-Vinylacetat-Copolymer mit einem Vinylacetatgehalt von 70 Gew.-% und einem durchschnittlichen Molekulargewicht von 200 000 g/Mol.

Harzkomponente H:

Emulsionscopolymerisat aus 69 Gew.-% $\alpha$-Methylstyrol und 31 Gew.-% Acrylnitril mit einem Staudinger-Index $[\eta]$ = 0,6 dl/g [in Dimethylformamid].

Herstellung der erfindungsgemäßen Polymerisatmischungen enthaltend a) - d)

Die Emulsionen der Komponenten a) bis d) werden in den in Tabelle 1 angegebenen Mischungsverhältnissen, bezogen auf Polymerfeststoff der Emulsion, bei Raumtemperatur miteinander vermischt, mit 1,2

4

Gew.-%, bezogen auf Feststoff, phenolischem Antioxidans stabilisiert und bei Temperaturen von 70 - 98° C mit wäßriger $MgSO_4$-Lösung koaguliert, filtriert, gewaschen und zu einem Pulver getrocknet.

Herstellung der Polyvinylchlorid-(PVC)Formmassen und Prüfkörper

Zur Herstellung der PVC-Formmassen werden die Polymerisatmischungen aus Tabelle 1, PVC, Weichmacher (W 1, W 2) und Harzkomponente (H) in den in Tabelle 2 beschriebenen Gewichtsanteilen sowie zusätzlich mit je 2 Gew.-% Ba/Cd-Laurat (fest), 0,3 Gew.-% sterisch gehinderten, phenolischen Antioxidans (fest) und 0,2 Gew.-% Esterwachs kombiniert, auf einem Mischwalzwerk 15 Min. bei 180° C homogenisiert und bei 190° C zu Prüfkörpern verpreßt. Die Eigenschaften der so erhaltenen Prüfkörper sind in Tabelle 3 beschrieben.

Tabelle 1

| Zusammensetzung der erfindungsgemäßen und Vergleichs-Polymerisatmischungen (*) (in Gewichtsteilen) | | | | | | |
|---|---|---|---|---|---|---|
| Nr. | a) | b) | c) | d) | B 1) | B 2) |
| 1 | 40 | 18 | 40 | 2 | - | - |
| 2* | 40 | - | 40 | 2 | 18 | - |
| 3* | 40 | - | 40 | 2 | - | 18 |

Tabelle 2

| Zusammensetzung der PVC-Formmassen (in Gewichtsteilen, * = Vergleichsformmassen) | | | | | |
|---|---|---|---|---|---|
| Nr. | Polymerisatmischung aus Tabelle 1 [Nr./Gew.-Teil] | PVC | W 1 | W2 | H |
| I | 1/100 | 90 | 35 | - | - |
| II* | 2*/100 | 90 | 35 | - | - |
| III* | 3*/100 | 90 | 35 | - | - |
| IV | 1/50 | 50 | - | 40 | 20 |
| V* | 2*/50 | 50 | - | 40 | 20 |
| VI* | 3*/50 | 50 | - | 40 | 20 |

Tabelle 3: Mechanische Daten der PVC-Formmassen I - VI*
(Zusammensetzung siehe Tabelle 2; * = Vergleichsformmassen)

| Formmassen-Nr. | Zugfestigkeit DIN 53 455 [MPa] | Dehnung DIN 53 455 [%] | Weiterreißfestigkeit DIN 53 515 [N/mm] | Shore-Härte DIN 53 505 [15"] | Vicat A [°C] | Kältefestigkeit DIN 51 949 [-50°C/Dorndurchmesser 10 mm] |
|---|---|---|---|---|---|---|
| I | 20,1 | 200 | 74 | 55 | 72 | nicht gebrochen |
| II* | 21,0 | 196 | 78 | 55 | 70 | gebrochen |
| III* | 18,1 | 187 | 71 | 51 | 67 | gebrochen |
| IV | 31,2 | 245 | 80 | 55 | 80 | nicht gebrochen |
| V* | 30,8 | 231 | 88 | 57 | 79 | gebrochen |
| VI* | 26,5 | 232 | 74 | 51 | 70 | gebrochen |

Die Werte in Tabelle 3 zeigen, daß die erfindungsgemäße Polymerisatmischung 1 in PVC-Formmassen zu einer verbesserten Dehnung und/oder Kältefestigkeit im Vergleich zu nicht erfindungsgemäßen Kompositionen führt.

Die Vergleichsformmassen III* und VI* mit erhöhten Kautschukanteilen ergeben entgegen der Erwartung eine schlechtere Kältefestigkeit als I bzw. IV und darüber hinaus schlechtere mechanische Eigenschaften wie Dehnung und Vicat-Temperatur. Das heißt, die gewünschten Dehnungswerte und Kältefestigkeit lassen sich nicht mit herkömmlichen Kautschuken als Komponente b - auch in erhöhten Anteilen - erzielen.

**Patentansprüche**

1.  Polymerisatmischung aus
    a) 25 - 50 Gew.-Teilen eines Pfropfprodukts eines Gemisches aus 25 - 40 Gew.-Teilen Acrylnitril und 75 - 60 Gew.-Teilen Styrol, $\alpha$-Methylstyrol, Alkylmethacrylat oder Mischungen daraus auf einen teilchenförmigen hochvernetzten Dienkautschuk mit einem Kautschukgehalt von 20 - 40 Gew.-%,
    b) 45 - 10 Gew.-Teilen eines Pfropfprodukts eines Gemisches aus 20 - 35 Gew.-Teilen Acrylnitril und 80 - 65 Gew.-Teilen Styrol oder $\alpha$-Methylstyrol auf einen teilchenförmigen, hochvernetzten Dienkautschuk mit einem Kautschukgehalt von 50 -75 Gew.-%, wobei die Pfropfausbeute größer als 60 Gew.-% ist,
    c) 10 - 50 Gew.-Teilen eines teilchenförmigen, teilvernetzten kautschukartigen Copolymerisates eines $C_2$-$C_8$-Alkylacrylates und/oder Butadien mit (bezogen auf Copolymerisat) bis zu 40 Gew.-% Acrylnitril, welches einen mittleren Teilchendurchmesser ($d_{50}$) von 0,1 - 0,3 $\mu$m und einen Gelgehalt von 40 -99 Gew.-% aufweist und
    d) gegebenenfalls bis zu 5 Gew.-Teilen eines hochmolekularen, unvernetzten Copolymerisates aus Styrol oder Methylmethacrylat und bis zu 40 Gew.-% Acrylnitril mit Staudinger-Zahlen [$\eta$] (in Dimethylformamid bei 20°C) von >4 dl/g.

2.  Polymerisatmischung gemäß Anspruch 1 in Form eines fließfähigen trockenen Pulvers.

3.  Verfahren zur Herstellung der Polymerisatmischungen gemäß Anspruch 1, dadurch gekennzeichnet, daß man Latices der Bestandteile a) - d) so mischt, daß Koagulation vermieden wird und die Mischung dann in bekannter Weise koaguliert.

4.  Verwendung der Polymerisatmischungen gemäß Anspruch 2 als Additiv zu Polyvinylchlorid-Formmassen.

**Claims**

1.  A polymer blend of
    a) 25 to 50 parts by weight of a graft product of a mixture of 25 to 40 parts by weight of acrylonitrile and 75 to 60 parts by weight of styrene, $\alpha$-methyl styrene, alkyl methacrylate or mixtures thereof on a particulate, highly crosslinked diene rubber having a rubber content of 20 to 40% by weight,
    b) 45 to 10 parts by weight of a graft product of a mixture of 20 to 35 parts by weight of acrylonitrile and 80 to 65 parts by weight of styrene or $\alpha$-methyl styrene on a particulate, highly crosslinked diene rubber having a rubber content of 50 to 75% by weight, the graft yield being greater than 60% by weight,
    c) 10 to 50 parts by weight of a particulate, partially crosslinked rubber-like copolymer of a $C_{2-8}$ alkyl acrylate and/or butadiene containing up to 40% by weight (based on copolymer) of acrylonitrile which has an average particle diameter ($d_{50}$) of 0.1 to 0.3 $\mu$m and a gel content of 40 to 99% by weight and
    d) optionally up to 5 parts by weight of a high molecular weight, uncrosslinked copolymer of styrene or methyl methacrylate and up to 40% by weight of acrylonitrile having intrinsic viscosities [$\eta$] (in dimethyl formamide at 20°C) of > 4 dl/g.

2.  A polymer blend as claimed in claim 1 in the form of a free-flowing, dry powder.

3.  A process for the production of the polymer blends claimed in claim 1, characterized in that latices of components a) to d) are mixed in such a way that coagulation is avoided, after which the mixture is cogulated in known manner.

4.  The use of the polymer blends claimed in claim 2 as an additive for polyvinyl chloride moulding compounds.

**Revendications**

1. Mélange de polymères, comprenant :

    (a) 25 à 50 parties en poids d'un produit greffé d'un mélange de 25 à 40 parties en poids d'acrylonitrile et 75 à 60 parties en poids de styrène, d'$\alpha$-méthylstyrène, de méthacrylate d'alkyle ou de mélanges de ces composés sur un caoutchouc diénique fortement réticulé en particules, avec une teneur en caoutchouc de 20 à 40 % en poids,

    (b) 45 à 10 parties en poids d'un produit greffé d'un mélange de 20 à 35 parties en poids d'acrylonitrile et de 80 à 65 parties en poids de styrène ou d'$\alpha$-méthylstyrène sur un caoutchouc diénique fortement réticulé en particules avec une teneur en caoutchouc de 50 à 75 % en poids, le rendement de greffage étant supérieur à 60 % en poids,

    (c) 10 à 50 parties en poids d'un copolymère de type caoutchouc partiellement réticulé en particules, d'un acrylate d'alkyle en $C_2$ à $C_8$ et/ou de butadiène avec (par rapport au produit de copolymérisation) jusqu'à 40 % en poids d'acrylonitrile, qui présente un diamètre moyen ($d_{50}$) des particules de 0,1 à 0,3 $\mu$m et une teneur en gel de 40 à 99 % en poids, et

    (d) le cas échéant jusqu'à 5 parties en poids d'un copolymère non réticulé de haut poids moléculaire, de styrène ou de méthacrylate de méthyle et jusqu'à 40 % en poids d'acrylonitrile avec des indices de Staudinger [$\eta$] (dans le diméthylformamide à 20°C) de valeur supérieure à 4 dl/g.

2. Mélange de polymères suivant la revendication 1, sous forme d'une poudre sèche pouvant s'écouler.

3. Procédé de production des mélanges de polymères suivant la revendication 1, caractérisé en ce qu'on mélange des latex des composants (a) à (d) de manière à éviter une coagulation, et on fait ensuite coaguler le mélange d'une manière connue.

4. Utilisation des mélanges de polymères suivant la revendication 2, comme additif pour des compositions à mouler à base de polychlorure de vinyle.